# EUROPEAN PATENT SPECIFICATION

(11) **EP 2 943 683 B1**
(45) Date of publication and mention of the grant of the patent: **09.10.2019**
(21) Application number: 14737885.5
(22) Date of filing: 13.01.2014
(51) Int. Cl.: F03D 13/25, H02G 9/12, F03D 9/00, F03D 13/20, B63B 21/50, F03D 9/25

(54) **A POWER CABLE ARRANGEMENT FOR AN OFFSHORE WIND POWER PARK AND A METHOD FOR ESTABLISHING AND DISESTABLISHING A POWER CABLE ARRANGEMENT**
STROMKABELANORDNUNG FÜR EINE OFFSHORE-WINDENERGIEANLAGE UND VERFAHREN ZUR EINRICHTUNG UND TRENNUNG EINER STROMKABELANORDNUNG
AGENCEMENT DE CÂBLE D'ÉNERGIE POUR UN PARC ÉOLIEN EN MER ET PROCÉDÉ POUR INSTALLER ET DÉSINSTALLER UN AGENCEMENT DE CÂBLE D'ÉNERGIE

(30) Priority: 11.01.2013 SE 1350033
(43) Date of publication of application: 18.11.2015
(73) Proprietor: Flowocean AB, 721 30 Västerås (SE)
(72) Inventor: MORITZ, Bertil, S-723 48 Västerås (SE); RAPP, Matthias, S-114 59 Stockholm (SE)
(86) International application number: PCT/SE2014/050026
(87) International publication number: WO 2014/109705

(56) References cited:
- EP-A1- 1 858 031
- WO-A2-2009/036107
- WO-A2-2009/131826
- WO-A2-2009/131826
- CN-A- 101 232 167
- DE-U1- 20 110 160
- DE-U1- 20 110 160
- US-A1- 2010 219 645
- US-A1- 2010 219 645
- US-A1- 2011 074 155
- US-A1- 2012 319 405

## Description

### FIELD OF THE INVENTION

The present invention relates to a power cable arrangement for an offshore wind power park. The wind power park comprises a plurality of wind power plants each comprising a floatable wind power unit floating at the surface of the sea, a plurality of anchoring elements arranged in the bottom sediment of the sea and a plurality of anchoring wires extending between the anchoring elements and the wind power unit for anchoring the wind power unit. The power cable arrangement comprises, for each wind power plant, at least one primary power cable for connecting the wind power plant to the grid.

The present invention further relates to a method for establishing and disestablishing a power cable arrangement.

### PRIOR ART

In prior art offshore wind power parks, the power cables for connecting the wind power plants to the grid are buried in the bottom sediment and arranged extending between the wind power plants.

Prior to deciding the extension of the power cables, it is necessary to explore the structure and the topography of the seabed and to adjust the position and extension of the power cable on basis of the results of the exploration. When the position and extension of the power cables have been set, the power cables need to be positioned buried in the bottom sediment so that the power cable is protected from damage. However, even if the power cable is buried in the bottom sediment, there is a risk of connection failure due to interaction between the power cable and the bottom sediment.

A problem with prior art cable arrangements is that exploration of the seabed and the arrangement of the power cables in the bottom sediment is costly. Accordingly, the establishing of the power cable arrangement according to prior art constitute a significant part of the overall cost of prior art wind power plants and wind power parks. Furthermore, the establishment of the power cable, in particular during the arrangement of the power cables within the bottom sediment, is time consuming and requires use of divers and specially arranged ships. This further adds cost to the establishment of the power cable arrangement. Furthermore, the use of divers involves potential risks of injuries to workers involved. Another problem with prior art cable arrangements is that the extension of the power cables is dependent on the structure and the topography of the seabed. Moreover, it is difficult and time consuming to replace a defect power cable in prior art cable arrangements.

US 2010/0219645 A1 describes a wind power park having a power cable arrangement corresponding to the preamble of claim 1. The wind power park comprises a plurality of wind power plants, wherein each plant comprises a floatable wind power unit floating on the surface of the sea. A plurality of anchors are arranged in a bottom sediment of the sea and a plurality of anchoring wires extend between the anchors and the wind power units. For each wind power plant, the power cable arrangement may comprise a power cable through which electricity generated in the wind power unit can pass into an underwater cable for connection to the grid. The anchoring wires can also carry the power cables.

### OBJECTIVES AND SUMMARY OF THE INVENTION

The objective of the present invention is to provide an improved power cable arrangement for an offshore wind power park. A first objective of the invention is to provide a power cable arrangement that may be established independently of the structure and the topography of the seabed and which does not require exploration and adjustment of the positions and extension of the power cables in view of the result of the exploration. A second objective of the invention is to provide a power cable arrangement that reduces the time and costs involved for establishing the power cable arrangement for an offshore wind power plant in comparison with prior art. A third objective of the invention is to provide a power cable arrangement that does not require use of divers and/or specially arranged ships for establishing the power cable arrangement. A fourth objective is to provide a power cable arrangement that facilitate the replacement of defect power cable.

These objectives are obtained by a power cable arrangement for an offshore wind power plant as defined by claim 1. The power cable arrangement is characterized in that for at least a portion of the wind power plants, the primary power cable is attached to and extends along at least one of the anchoring wires.

By attaching the primary power cable to the anchoring wire so that it extends along the anchoring wires, the primary power cable extends separated from the bottom sediment. Accordingly, the establishment of the power cable arrangement is possible independently of the structure and the topography of the seabed. Thereby, no exploration of the seabed prior to arranging the primary power cables is necessary. Furthermore, no adjustments of the position and extension of the primary power cable are necessary. The attachment of the primary power cable to the anchoring wires is possible from the surface of the sea without the use of divers and specially arranged ships. Alternatively, the primary power cables can be pre-arranged attached to the anchoring wires.

According to one embodiment of the invention, the power cable arrangement comprises attachment means for attaching the primary power cable to the anchoring wire. The attachment means are preferably distributed along the length of the anchoring wire.

According to one embodiment of the invention, the power cable arrangement comprises attachment means for attaching the primary power cable to the anchoring wire, which attachment means comprises a plurality of connection elements attached distributed along the anchoring wire and providing a releasable attachment of the primary power cable to the anchoring wire.

The connection elements enable by means of the releasable attachment the primary power cable to be attached to and de-attached from the anchoring wire. The de-attachment of the primary power cable from the anchoring wire and displacement to the surface of the sea is necessary when repairing a connection failure of the primary power cable.

According to one embodiment of the invention, the connection element comprises a first portion arranged to receive and attach the primary power cable to the connection element and a second portion adapted to receive the anchoring wire, wherein the connection element comprises an open state adapted to allow the anchoring wire to be received and to be removed from the second portion, and a closed state adapted to prevent the anchoring wire from being removed from the second portion. The connection element and the primary power cable are displaced as a unit to the anchoring wire, which facilitates the procedure of arranging the anchoring wire in the second portion.

According to one embodiment of the invention, the open state corresponds to a first orientation of the connection element and the closed state corresponds to a second orientation of the connection element, and the cable arrangement comprises a control wire adapted to allow the connection element to be remotely changed between the first and the second orientation. By means of that the open and closed state corresponds to different orientations, the connection element can be remotely changed between the open and closed state using the control wire. Accordingly, the connection element can be remotely operated from the surface of the sea.

According to one embodiment of the invention, the power cable arrangement comprises a guide arrangement for guiding the primary power cable to the anchoring wire, which guide arrangement, for each connection element, comprises a float at the surface of the sea and a guide wire extending between the float and said connection element.

By means of the float and the guide wire, the primary power cable is quickly and precisely displaced from the surface of the sea to vicinity of the anchoring wire. Accordingly, the guide arrangement facilitates the arrangement of the primary power cable to the anchoring wire.

According to one embodiment of the invention, at least one of the anchoring elements are used for anchoring at least a first wind power unit and a second wind power unit adjacent to the first wind power unit, wherein the first wind power unit and the second wind power unit comprise respective primary power cables arranged so that the primary power cable of the first wind power unit is attached to and extends along the anchoring wire between said anchoring element and the first wind power unit, and the primary power cable of the second wind power unit is attached to and extends along the anchoring wire between said anchoring element and the second wind power unit.

Two adjacent wind power units have at least one anchoring element in common. The respective primary power cables are attached to and extend along the anchoring wires from the same anchoring elements. By means of arranging the primary power cables of the first and the second wind power unit on the anchoring wires extending from the same anchoring element, a combined extension of the primary power cables is obtained.

According to one embodiment of the invention, an electrical connection is established between the respective primary power cables of the first wind power unit and the second wind power unit.

According to one embodiment of the invention, the power cable arrangement comprises an intermediate power cable between the primary power cable of the first wind power plant and the primary power cable of the second wind power plant that electrically connects the two primary power cables together, and a buoyancy element arranged at a distance from an end of the anchoring element and configured to hold the intermediate power cable spaced apart from the end of said anchoring element.

The intermediate power cable establish an electrical connection between the primary power cable of the first wind power unit and the primary power cable of the second wind power unit. By means of the buoyancy element, it is assured that the intermediate power cable is separated from the end of the anchoring element and the bottom sediment. Thereby, there is no risk of interaction between the intermediate power cable and the anchoring element or the bottom sediment that could damage the power cable. Also the primary cables of the first and the second wind power unit are kept separated from the bottom sediment and the anchoring elements due to their attachment to the respective anchoring wire.

According to one embodiment of the invention, the buoyancy element is located between the surface of the sea and the end of said anchoring element. By means of arranging the buoyancy element submerged, the intermediate power cable and buoyancy element are separated from interaction with vessels at the surface of the sea.

According to one embodiment of the invention, the primary power cable attached to the anchoring wire between said anchoring element and the first wind power unit, the intermediate power cable and the primary power cable attached to the anchoring wire between said anchoring element and the second wind power unit constitutes a unitary power cable.

According to one embodiment of the invention, the power cable arrangement comprises at least a first primary power cable and a second primary power cable for each wind power plant of a portion of the wind power plants, adapted to connect the wind power units to the grid, wherein the first primary power cable is attached to and extends along a first anchoring wire between a first anchoring element and the wind power unit, and the second primary power cable is attached to and extends along a second anchoring wire between a second anchoring element and the wind power unit.

The arrangement of the first and the second primary power cable on the first and the second anchoring wire provides a combined extension of the primary power cables separated from the bottom sediment. The first and the second primary power together with the anchoring element and the anchoring wires forms a network.

A further objective of the invention is to provide a wind power park with improved redundancy in the event of a connection failure of one of the primary power cables.

This objective is achieved according to one embodiment of the invention, where the power cable arrangement comprises several open loops. Equivalent to electric medium voltage distribution system, each secondary substation is connected to two lines. At one point in the loop there is an open breaker or disconnector. This system makes it possible to isolate a fault between secondary substations and still all the generated power.

According to one embodiment of the invention, at least a portion of the wind power units are arranged along a first line and second line, and the anchoring elements are arranged along a third line between the first line and the second line, which first line, second line and third line extend in parallel with each other, wherein the power cable arrangement comprises a plurality of primary power cables, each comprising at least two separate conductors, for connecting the wind power units to the grid, wherein the primary power cables are arranged in a first cable path and a second cable path, which first cable path is arranged so that the primary power cables alternating extend between the wind power units of the first line and the anchoring elements of the third line, and which second path is arranged so that the primary power cables alternating extends between the wind power units of the second line and the anchoring elements of the third line, and wherein the first cable path independently connects the wind power units of the first line to grid and the second cable path independently connects the wind power units of the second line to grid.

The first and the second cable path provide redundancy to the connection of the wind power units to the grid. In the event of a connection failure of one of the first and the second primary power cables of one of the cable paths, the concerned wind power plant is maintained connected to the grid by means of the other of the first and the second primary power cables, and the other cable path. Furthermore, the redundancy is established in a cost efficient manner using less anchoring elements, anchoring wires and primary power cables in comparison to prior art arrangements.

According to one embodiment of the invention, the wind power park is arranged so that the wind power units are distributed forming a hexagonal cell having one of the anchoring elements located in the center of said hexagonal cell. The hexagonal cell with an anchoring element located in the center of the cell and the wind power units around the anchoring elements provides a redundant connection in a cost effective manner using reduced number of anchoring elements, anchoring wires and primary power cables in comparison to prior art arrangements.

According to one embodiment of the invention, the power cable arrangement comprises at least one secondary power cable adapted to connect the wind power park to the grid, which secondary power cable is connected to said primary power cable and extends away from the wind power plant. The secondary power cable is used for connecting the wind power plant to the grid in the case where the anchoring wires of the wind power plant does not provide a suitable extension to the grid.

According to one embodiment of the invention, the power cable arrangement comprises a switch gear for at least a majority of the wind power units, which switch gear comprises means for switching between connection of the first primary power cable and the second primary power cable, between two of the conductors of the first primary power cable, and between two of the conductors of the second primary power cable. The switch gear enables disconnection of a primary power cable at a connection failure and thereby assures that the wind power unit is maintained connected to the grid.

According to one embodiment of the invention, the switch gear is a so called ring main unit.

According to one embodiment of the invention, the anchoring elements are one of a suction pile and driven pile. The use of a suction pile and a driven pile provides an anchoring element that is established with sufficient accuracy for enabling distribution of the wind power units in hexagonal cells with an anchoring element in the centre of each cell.

The term "suction pile" relates to an elongated tubular element which interior is evacuated of water, thereby creating a pressure difference that drives the tubular element into the bottom sediment. The term "driven pile" relates to an elongated element that is driven into the bottom sediment, normally by means of repeated strokes. Both suction pile and driven pile can withstand forces directed vertical to their longitudinal axis and certain sized forces along their longitudinal axis.

According to one embodiment of the invention, the power cable arrangement comprises at least one tube attached to and extending along at least one of the anchoring wires, in which tube the primary power cable extends. Preferably, the tube is a plastic tube, such as a polyethylene (PE) tube, with a density less than water so that it can support the weight of the power cable. The tube facilitates replacement of a defect power cable in the case of cable failure.

A further objective of the invention is to provide a method for establishing the power cable arrangement according to the invention from the surface of the sea. This objective is obtained by a method for establishing a power cable arrangement. The power cable arrangement comprises a power cable and a plurality of connection elements, the connection elements comprising an open state allowing the connection element and the anchoring wire to engage with each other, and a closed state maintaining the connection element and the anchoring wire engaged to each other. The method comprises the steps of:
- attaching the power cable to the connection elements,
- setting the connection elements to the open state,
- guiding the connection elements together with the power cable from the surface of the sea to the anchoring wire so that the connection elements engage with the anchoring wire, and
- setting the connection elements to the closed state.

The method enables the power cable to be displaced from the surface of the sea and to be brought into vicinity of the anchoring elements for attachment to the anchoring wire so that the power cable extends along the anchoring wire. The method provides a quick and cost effective establishment of the power cable arrangement from the surface of the sea.

According to one embodiment of the invention, the method is carried out for a power cable arrangement comprising a guide arrangement for guiding the primary power cable to the anchoring wire, which guide arrangement, for each connection element, comprises a float at the surface of the sea, a guide wire extending between the float and said connection element, and a guide loop for the respective connection element. The method further comprises the steps of:
- arranging the guide loops around one of the power cable and the connection element, and
- guiding the power cable along the guide wires to the anchoring wire.

According to one embodiment of the invention, the method comprises
- stretching the guide wires while guiding the power cable to the anchoring wire.

By stretching the guide wires, the power cable is quickly guided to the vicinity of the anchoring wire.

The objective of providing a method for establishing a power cable arrangement according to the invention from the surface of the sea is also achieved by a method for establishing a power cable arrangement comprising at least one tube attached to and extending along at least one of the anchoring wires, in which tube the primary power cable extends, the method comprising the steps of:
- attaching the tube to the anchoring wire, and
- pulling the power cable into the tube.

According to this aspect of the invention, the tube may be mounted to the anchoring wire before or after the anchoring wire is anchored in the bottom sediment of the sea. The power cable may then easily be replaced in case of cable failure by pulling the defect power cable out of the tube and pulling a new one into the tube.

According to one embodiment of the invention, the method further comprises the step of:
- guiding the tube from the surface of the sea to the anchoring wire.

In this embodiment, the tube is attached to the anchoring wire when the latter is already anchored in the bottom sediment of the sea.

A further objective of the invention is to provide a method for disestablishing a power cable arrangement. The power cable arrangement comprises a power cable and a plurality of connection elements, the connection elements comprising an open state allowing the connection element and the anchoring wire to engage with each other, and a closed state maintaining the connection element and the anchoring wire engaged to each other. The method comprises the steps of:
- setting the connection elements to the open state,
- guiding the connection elements together with the power cable from the anchoring wire to the surface of the sea,
- removing the power cable from the connection element.

According to one embodiment of the invention, the method is carried out for a power cable arrangement comprising a guide arrangement for guiding the primary power cable to the anchoring wire, which guide arrangement, for each connection element, comprises a float at the surface of the sea, a guide wire extending between the float and said connection element, and a guide loop for the respective connection element. The method further comprises the steps of:
- guiding the power cable along the guide wires from the anchoring wire to the surface of the sea, and
- removing the guide loops around one of the power cable and the connection element.

### BRIEF DESCRIPTION OF THE DRAWINGS

The invention will now be explained more closely by the description of different embodiments of the invention and with reference to the appended figures.
- Fig. 1: shows a power cable arrangement for an offshore wind power park according to an embodiment of the invention.
- Fig. 2a: shows a primary power cable attached to an anchoring wire according to an embodiment of the invention.
- Fig. 2b: shows a power cable attached to a connection element arranged in an open state.
- Fig. 2c: shows a power cable attached to a connection element arranged in a closed state.
- Fig. 3a: shows an arrangement of wind power plants and anchoring elements.
- Fig. 3b: shows the arrangement of wind power plants oriented in hexagonal cells.
- Fig. 3c: shows arrangement of anchoring wires between the wind power units and the anchoring elements.
- Fig. 3d: shows a power cable arrangement for an offshore wind power park according to an embodiment of the invention.
- Fig. 3e: shows an example of reconnection of a wind power plant in the event of a connection failure of one of the primary power cables.
- Fig. 4a: shows a flow chart of a method for arranging a power cable to an anchoring wire.
- Fig. 4b: shows a flow chart of a method for removing a power cable from an anchoring wire.
- Fig. 5: schematically shows a method of guiding a tube to an anchoring wire.

### DETAILED DESCRIPTION OF PREFERRED EMBODIMENTS OF THE INVENTION

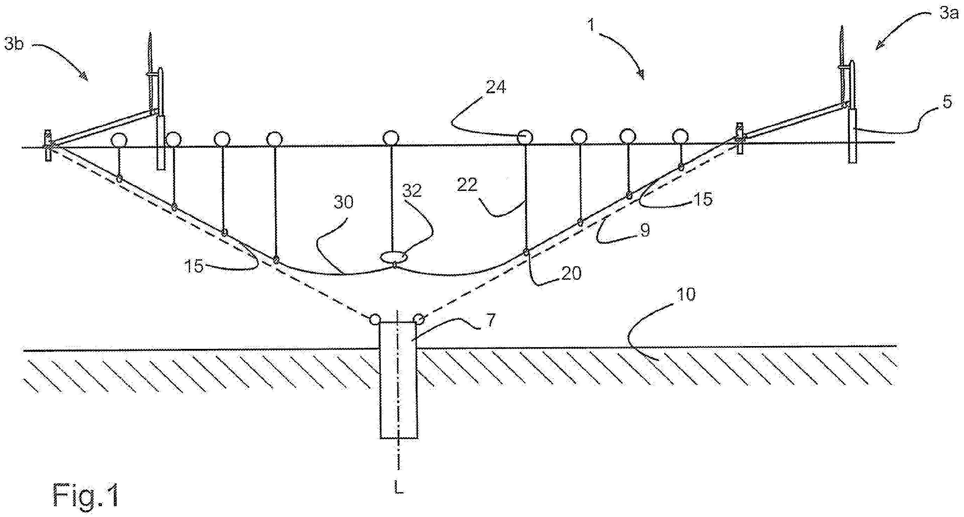

Figure 1 shows a power cable arrangement 1 for an offshore wind power plant according to an embodiment of the invention. In figure 1 a first wind power plant 3a is connected to a second wind power plant 3b by means of the power cable arrangement 1. The first wind power plant 3a and the power cable arrangement 1 arranged to the first wind power plant 3a will be described in detail. The second wind power plant 3b is arranged with corresponding cable arrangement 1.

Each wind power plant 3a, 3b comprises a floatable wind power unit 5, a plurality of anchoring elements 7 and a plurality of anchoring wires 9 (indicated by dotted lines) extending directly from the anchoring elements 7 to the wind power unit 5. The anchoring elements 7 are arranged firmly attached in the bottom sediment 10 of the sea.

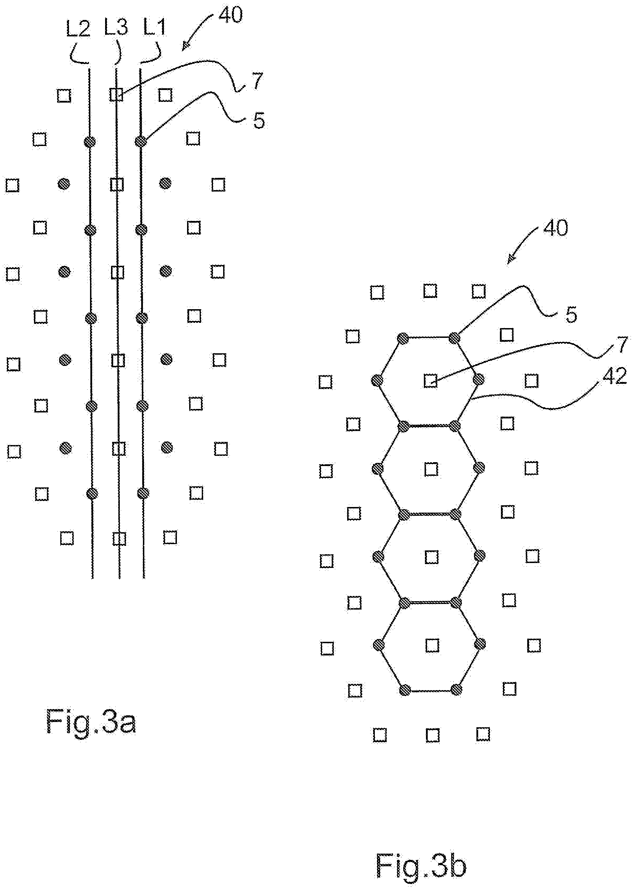

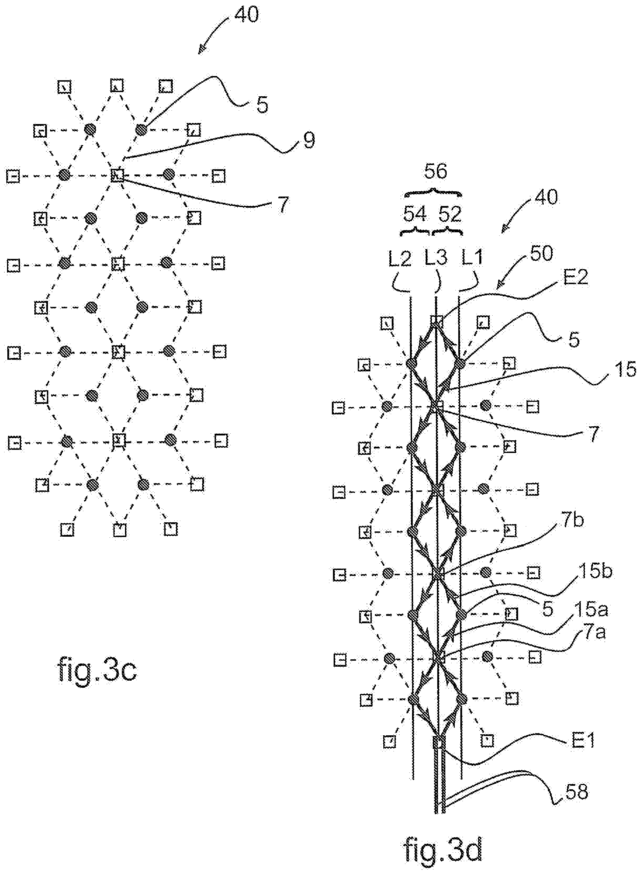

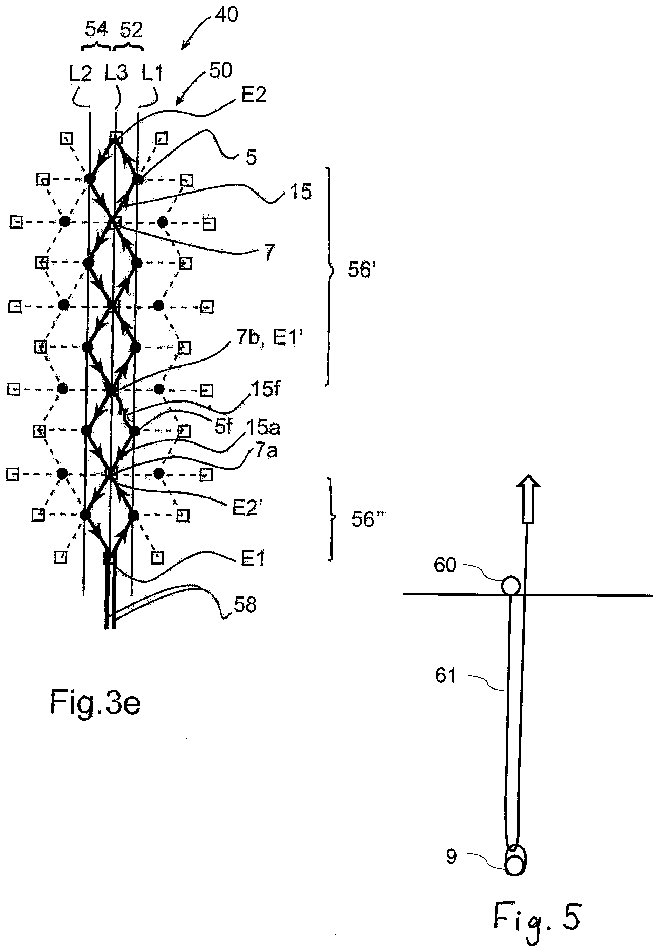

Preferably, the wind power plants 3a, 3b are arranged forming a hexagonal cell. It is furthermore preferable that each wind power plant 3a, 3b is attached by means of at least three anchoring wires 9. The arrangement of the wind power plants 3a, 3b, the anchoring elements 7 and the anchoring wires will be discussed further in connection with fig. 3.

The anchoring element 7 shown in fig. 1 is shared between the first wind power plant 3a and the second wind power plant 3b. The anchoring element 7 enables attachment of one of the three anchoring wires 9 for the first wind power plant 3a respective the second wind power plant 3b.

Each anchoring element 7 comprises a longitudinal element comprising a longitudinal axis L extending into the bottom sediment 10. The anchoring elements 7 are preferably one of a suction pile and a driven pile. The anchoring elements 7 provide an anchoring that withstands forces both perpendicular to and parallel with the longitudinal axis L.

The power cable arrangement 1 comprises a primary power cable 15 (indicated by a solid line) for connecting the first wind power plant 3a and the second wind power plant 3b to the grid. The primary power cable 15 of the first wind power plant 3a is attached to and extends along the anchoring wire 9 between the anchoring element 7 and the first wind power plant 3a. The primary power cable 15 of the second wind power plant 3b is attached to and extends along the anchoring wire 9 between the anchoring element 7 and the second wind power plant 3b.

The power cable arrangement is configured so that the primary power cables 15 are attached to the respective anchoring wire 9 by means of that the power cable arrangement 1 comprises attachment means distributed along the length of the respective anchoring wires 9. Thereby, the primary power cables 15 extend at least partly along the respective anchoring wire 9 so that the primary power cables 15 are maintained separated from the bottom sediment. The primary power cables 15 are arranged without the necessity to bury the primary power cables in the bottom sediment. Accordingly, the power cable arrangement 1 of the invention can be established in a cost-effective manner.

The attachment means comprises a plurality of connection elements 20 distributed along the anchoring wire 9. The primary power cable 15 is thereby attached at the positions of the connection elements 20 to the anchoring wire 9.

The power cable arrangement 1 further comprises a guide arrangement for guiding the primary cable 15 between the surface of the sea and the anchoring wire 9. The guide arrangement comprises a guide wire 22 and a float 24 for each of the connection elements 20. The guide wire 22 extends from the connection element 20 to the float 24 at the surface of the sea. By means of the guide arrangement, the primary power cable 15 can be guided from the surface of the sea to vicinity of the anchoring wire and be attached to the anchoring wire 9 by means of the connection elements 20 without the use of divers and specially arranged ships.

The power cable arrangement 1 further comprises an intermediate power cable 30 between the primary power cable 15 of the first wind power plant 3a and the primary power cable 15 of the second wind power plant 3b. The intermediate power cable 30 establishes an electrical connection between the primary power cable 15 of the first wind power plant 3a and the primary power cable 15 of the second wind power plant 3b. Preferably, the two primary power cables 15 and the intermediate power cable 30 constitute a unitary cable without joints.

The power cable arrangement 1 further comprises a buoyancy element 32 configured to hold the intermediate power cable 30. In fig. 1, the intermediate power cable 30 is separated from the bottom sediment 10, an end of the anchoring element 7 and the surface of the sea by means of that the buoyancy element 32 is arranged between the end of the anchoring element 7 and the surface of the sea. Thereby, the risk of interaction between the intermediate power cable 30 and elements in the sea is reduced.

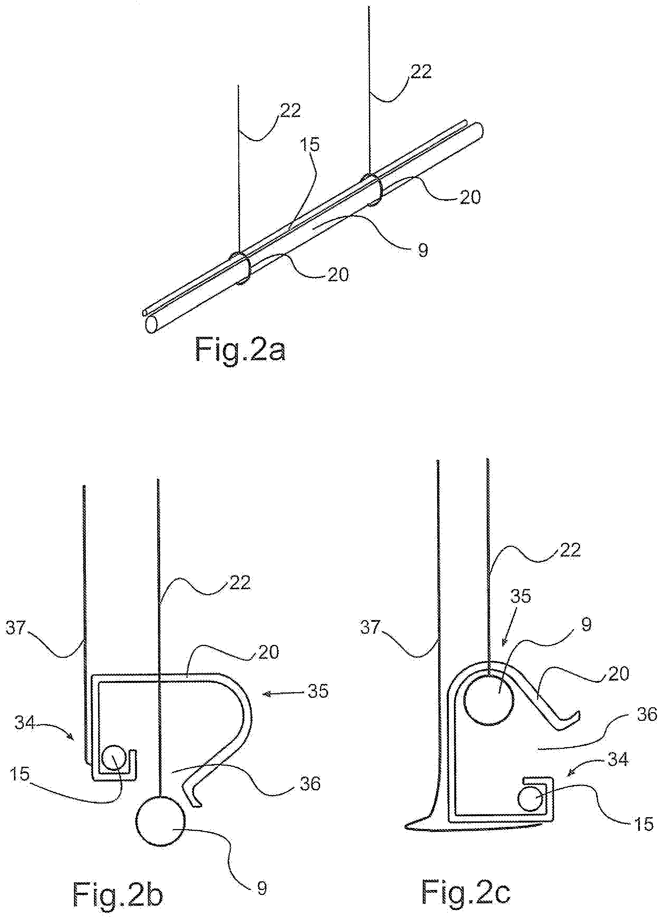

Fig. 2a shows the primary power cable 15 attached to an anchoring wire 9 according to an embodiment of the invention. The connection elements 20 are distributed along the length of the anchoring wire 9 so that the primary power cable 15 is free between the connection elements 20. The guide wires 22 are directed toward the respective connection element 20.

The cross section of the primary power cable 15 is smaller than the cross section of the anchoring wire 9. Accordingly, the weight of the primary power cable 15 has no or negligible influence of the anchoring capacity of the anchoring wire 9. Preferably, the anchoring wire 9 comprises mainly a polymeric material, such as polyester. Thereby, there is no or negligible risk of abrasion on the primary power cable 15 during possible movements of the free parts of the primary power cable 15 in respect to the anchoring wire 9.

Fig. 2b and 2c shows an embodiment of a connection element 20 configured to function as a hook. A primary power cable 15 is attached to the connection element 20. The connection element 20 comprises a first portion 34, a second portion 35 and an opening 36. The first portion 34 is arranged to receive and attach the primary power cable 15 to the connection element 20. The second portion 35 is adapted to receive an anchoring wire 9.

The connection element 20 further comprises an open state and a closed state. The open state relates to a first orientation of the connection element 20 and the closed state relates to a second orientation of the connection element 20. The connection element 20 is adapted to allow the anchoring wire 9 to be received and to be removed from the second portion 35 when the connection element 20 is in the open state. The connection element 20 prevents the anchoring wire 9 to be removed from the second portion 35 when the connection element 20 is in the closed state.

The connection element 20 further comprises a control wire 37 adapted to allow the connection element 20 to be remotely changed between the first and the second orientation. Accordingly, the control wire 37 allows the connection element 20 to be changed between the closed state and the open state. The connection element 20 thereby provides a releasable attachment of the primary power cable 15 to the anchoring wire 9.

In fig. 2b the connection element 20 is arranged in the open state by means of stretching the control wire 37. The connection element 20 together with the primary power cable 15 is lowered toward the anchoring wire 9 so that the anchoring wire 9 enters into the opening 36.

Thereafter, as shown in fig. 2c, the connection element 20 is changed from the open state to the closed state by means of the relaxing the control wire. The anchoring wire 9 is thereby received by the second portion 35 of the connection element 20. The primary power cable 15 is by means of the connection element 20 attached to the anchoring wire 9.

The primary power cable 15 may extend along the anchoring wire 9 in at least one tube, which tube is attached to and extends along the anchoring wire 9. In this case, the power cable 15 is attached to the anchoring wire 9 by means of the tube. The tube may be attached to the anchoring wire by connection elements in a similar way as described above for the primary power cable 15. The tube is preferably made of a material with a lower density than water, such that the tube at least partly supports the weight of the primary power cable 15. The tube can be attached to the anchoring wire 9 before the anchoring wire 9 is installed and submerged. It may also be attached to the anchoring line 9 at a later stage.

Also the intermediate power cable 30 may extend in a tube.

Fig. 3a-e shows an arrangement of a wind power park 40 comprising a plurality of wind power units 5 (marked with dots) and anchoring elements 7 (marked with squares).

In fig. 3a, a first set of the wind power units 5 are arranged along a first line L1 and a second set of the power units 5 are arranged along a second line L2. A set of the anchoring elements 7 are arranged along a third line L3 arranged between the first line L1 and the second line L2. The first line L1, the second line L2 and the third line L3 extend parallel with each other.

Fig. 3b shows that the wind power units 5 and anchoring elements 7 of fig. 3a are oriented in hexagonal cells 42 (indicated by connecting lines between the wind power units 5) having an anchoring element 7 located in the centre of the hexagonal cell 42.

Fig. 3c shows arrangement of anchoring wires 9 between the wind power units 5 and the anchoring elements 7. Each wind power unit 5 is anchored by means of three anchoring wires 9. The anchoring wires 9 are indicated by dotted lines in fig. 3c-3e.

The hexagonal cell 42 is preferable for reducing the number and length of the necessary anchoring elements 7 and anchoring wires 9 for anchoring the wind power park 40. By arranging the primary power cables 15 on the anchoring wires 9 according to the invention, the number and length of the necessary primary power cables 15 is reduced in comparison to prior art power cable arrangements for wind power parks 40.

Fig. 3d shows an example of a power cable arrangement 50 for an offshore wind power park 40 according to an embodiment of the invention. For the purpose of explaining the invention, only the connection of the wind power units 5 at a central part of the wind power park 40 is indicated. It is to be understood that also the wind power units 5 at the rim of the wind power park 40 are connected by means of a plurality of primary power cables 15.

The power cable arrangement 50 comprises a plurality of primary power cables 15. The power cable arrangement 50 comprises at least a first primary power cable 15a and a second primary power cable 15b for each wind power plant 3a, 3b adapted to connect the wind power plant 3a, 3b to the grid. The first primary power cable 15a is attached to and extends along a first anchoring wire 9 between a first anchoring element 7a and the wind power unit 5. The second primary power cable 15b is attached to and extends along a second anchoring wire 9 between a second anchoring element 7b and the wind power unit 5.

The primary power cables 15 are arranged in a first cable path 52 and a second cable path 54. The first cable path 52 is arranged so that the primary power cables 15 involved alternately extend between the wind power units 5 of the first line L1 and the anchoring elements 7 of the third line L3. The second cable path 54 is arranged so that the primary power cables 15 involved alternately extend between the wind power units 5 of the second line L2 and the anchoring elements 7 of the third line L3. The first cable path 52 and the second cable path 54 are connected with each other at the anchoring elements 7 of the third line L3.

The power cable arrangement 50 further comprises a plurality of switch gears, such as a ring main unit, arranged at the wind power units 5. In fig. 3d the first cable path 52 and the second cable path 54 form together a ring circuit 56 between a first end point E1 and a second end point E2. The ring circuit 56 is indicated by arrows on the primary power cable 15. The ring circuit 56 provides an improved redundancy to the power cable arrangement 50, which assures uninterrupted transmission of generated power from all of the wind power plants 3a, 3b of the wind power park 40.

The power cable arrangement 50 further comprises a secondary power cable 58 arranged to connect the ring circuit to the grid. The secondary power cable 58 is electrically connected to the first end point E1 of the ring circuit 56.

Preferably, the wind power park 40 has such an extent that the central part of the wind power park 40 configured with the ring circuit 56 as in fig. 3d constitutes a larger portion of the wind power park 40 in comparison to the rim portions of the wind power park 40 configured with the radial circuit. Thereby, a major part of the wind power park 40 is provided with the redundant connection provided by the power cable arrangement 50 of the invention.

Fig. 3e shows an example of a reconnection of a wind power plant in the event of a connection failure of one of the primary power cables.

In the example, a connection failure has occurred on a defect primary power cable 15f. In order to assure uninterrupted transmission of generated power from the wind power unit 5f that is directly influenced by the connection failure, the ring main unit of the directly influenced wind power unit 5f is switched so that the generated power is fed through the non-defect primary power cable 15a connected to the directly influenced wind power unit 5f.

The reconnection of the ring main unit of the directly influenced wind power unit 5f results in that the wind power units 5 of the wind power park 40 will form a first ring circuit 56' between a new first end point E1' and the second end point E2 and a second ring circuit 56" between the first end point E1 and a new second end point E2'. In the remaining parts of the wind power park 40 the generated power will be fed in a radial circuit.

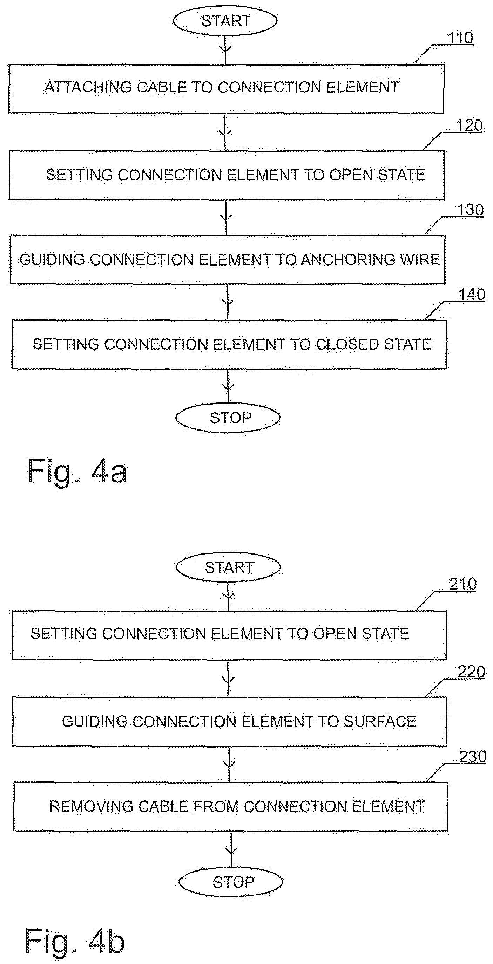

Fig. 4a shows a flow chart of a method for establishing a power cable arrangement 1 comprising attaching a power cable 15 to an anchoring wire 9. The power cable arrangement 1 comprises a power cable 15 and a plurality of connection elements 20. The connection element 20 comprises an open state which allows the connection element 20 and the anchoring wire 9 to engage with each other. The connection element 20 comprises a closed state where the connection element 20 and the anchoring wire 9 are maintained engaged to each other.

The method is initiated by, in a step 110, attaching the power cable 15 to the connection element 20. Thereby, the power cable 15 and the connection element 20 will be displaced together. In fig. 2b and 2c the power cable 15 is attached to the first portion 34 of the connection element. In a step 120, the method comprises setting the connection element 20 to the open state, as shown in fig. 2b.

In a step 130, the connection element 20 is guided together with the power cable 15 from the surface of the sea to the anchoring wire 9 so that the connection element 20 engages with the anchoring wire 9. Thereby, the anchoring wire 9 enters into the opening 36 of the connection element 20, as shown in fig. 2b and 2c. In a step 140, the method comprises setting the connection element 20 to the closed state, as shown in fig. 2c. Thereby, the power cable 15 is attached to the anchoring wire 9.

In the case when the power cable arrangement 1 according to the invention comprises a power cable 15 extending in a tube 60 attached to the anchoring wire 9, a method for establishing the power cable arrangement 1 is initiated by the step of guiding the tube 60 from the surface of the sea to the anchoring wire 9 as schematically shown in fig. 5. In a following step, the tube 60 is attached to the anchoring wire 9, and the power cable 15 is thereafter pulled into the tube 60. Of course, it is also possible to first pull the power cable into the tube and thereafter guide the assembly of the tube and the power cable from the surface of the sea to the anchoring wire 9. In the step of guiding the tube 60 from the surface of the sea to the anchoring wire 9, it is preferable to use a pulling arrangement comprising a pulling rope 61 arranged as a loop running from the surface of the sea, to a connection point at the anchoring wire 9, and back to the surface of the sea. One end of the pulling rope 61 is attached to the tube 60, and the other end is used for pulling at the pulling rope 61 in the direction of the shown arrow, in order to submerge the tube 60 and guide it toward the anchoring wire 9. When the tube 60 reaches the anchoring wire 9, it is attached thereto by means of a connection element. This can for example be in the form of a sinking locking device (not shown), which is guided along and moves gently downwards on the pulling rope 61, but which is locked for movement in the opposite upwards direction.

Fig. 4b shows a flow chart of a method for disestablishing a power cable arrangement 1.

The method is initiated by, in a step 210, setting the connection element 20 to the open state. Thereby, the connection element 20 is reoriented by means of stretching the control wire 37 from the orientation shown in fig. 2c to the orientation shown in fig. 2b. The open state of the connection element 20 allows the anchoring wire 9 to be removed through the opening and to be guided to the surface of the sea. In a step 220, the method is terminated by removing the power cable 15 from the connection element 20.

The present invention is not limited to the embodiments disclosed but may be varied and modified within the scope of the following claims.

## Claims

1. A power cable arrangement (1, 50) for an offshore wind power park (40), which wind power park (40) comprises a plurality of wind power plants (3a, 3b) each comprising a floatable wind power unit (5) floating at the surface of the sea, a plurality of anchoring elements (7) arranged in a bottom sediment (10) of the sea and a plurality of anchoring wires (9) extending between the anchoring elements (7) and the wind power unit (5) for anchoring the wind power unit (5), wherein, for each wind power plant (3a, 3b), the power cable arrangement (1, 50) comprises at least one primary power cable (15) for connecting the wind power plant (3a, 3b) to the grid, wherein for at least a portion of the wind power plants (3a, 3b), the primary power cable (15) is attached to and extends along at least one of the anchoring wires (9), wherein at least one of the anchoring elements (7) is used for anchoring at least a first wind power unit (5) and a second wind power unit (5) adjacent to the first wind power unit (5), wherein the first wind power unit (5) and the second wind power unit (5) comprise respective primary power cables (15) arranged so that the primary power cable (15) of the first wind power unit (5) is attached to and extends along the anchoring wire (9) between said anchoring element (7) and the first wind power unit (5), and the primary power cable (15) of the second wind power unit (5) is attached to and extends along the anchoring wire (9) between said anchoring element (7) and the second wind power unit (5), **characterized in that** a combined extension of the primary power cables (15) is obtained and an electrical connection is established between the respective primary power cables (15) of the first wind power unit (5) and the second wind power unit (5).

2. The power cable arrangement (1, 50) according to claim 1, wherein the power cable arrangement (1, 50) comprises attachment means for attaching the primary power cable (15) to the anchoring wire (9), which attachment means comprises a plurality of connection elements (20) attached distributed along the anchoring wire (9) and providing a releasable attachment of the primary power cable (15) to the anchoring wire (9) wherein the connection element (20) comprises a first portion (34) arranged to receive and attach the primary power cable (15) to the connection element (20) and a second portion (35) adapted to receive the anchoring wire (9), wherein the connection element (20) comprises an open state adapted to allow the anchoring wire (9) to be received and to be removed from the second portion (35), and a closed state adapted to prevent the anchoring wire (9) from being removed from the second portion (35).

3. The power cable arrangement (1, 50) according to claim 2, wherein the open state corresponds to a first orientation of the connection element (20) and the closed state corresponds to a second orientation of the connection element (20), and wherein the power cable arrangement (1, 50) comprises a control wire (37) adapted to allow the connection element (20) to be remotely changed between the first and the second orientation.

4. The power cable arrangement (1, 50) according to any one of claims 2-3, wherein the power cable arrangement (1, 50) comprises a guide arrangement for guiding the primary power cable (15) to the anchoring wire (9), which guide arrangement, for each connection element (20), comprises a float (24) at the surface of the sea and a guide wire (22) extending between the float (24) and said connection element (20).

5. The power cable arrangement (1, 50) according to any one of the preceding claims, wherein the power cable arrangement (1, 50) comprises an intermediate power cable (30) between the primary power cable (15) of the first wind power plant (3a) and the primary power cable (15) of the second wind power plant (3b) that electrically connects the two primary power cables (15) together, and a buoyancy element (32) arranged at a distance from an end of the anchoring element (7) and configured to hold the intermediate power cable (30) spaced apart from the end of said anchoring element (7), preferably wherein the buoyancy element (32) is located between the surface of the sea and the end of said anchoring element (7).

6. The power cable arrangement (1, 50) according to claim 5, wherein the primary power cable (15) attached to the anchoring wire (9) between said anchoring element and the first wind power unit (5), the intermediate power cable (30) and the primary power cable (15) attached to the anchoring wire (9) between said anchoring element (7) and the second wind power unit (5) constitutes a unitary power cable.

7. The power cable arrangement (1, 50) according to any one of claims 5-6, wherein the power cable arrangement (1, 50) comprises at least a first primary power cable (15a) and a second primary power cable (15b) for each wind power plant (3) of a portion of the wind power plants (3), adapted to connect the wind power units (5) to the grid, wherein the first primary power cable (15a) is attached to and extends along a first anchoring wire (9) between a first anchoring element (7a) and the wind power unit (5), and the second primary power cable (15b) is attached to and extends along a second anchoring wire (9) between a second anchoring element (7b) and the wind power unit (5).

8. The power cable arrangement (1, 50) according to any one of claims 5-7, wherein at least a portion of the wind power units (5) are arranged along a first line (L1) and second line (L2), and the anchoring elements (7) are arranged along a third line (L3) between the first line (L1) and the second line (L2), which first line (L1), second tine (L2) and third line (L3) extend in parallel with each other, wherein the power cable arrangement (1, 50) comprises a plurality of primary power cables (15), each comprising at least two separate conductors, for connecting the wind power units (5) to the grid, wherein the primary power cables (15) are arranged in a first cable path (52) and a second cable path (54), which first cable path (52) is arranged so that the primary power cables (15) alternating extend between the wind power units (5) of the first line (L1) and the anchoring elements (7) of the third line (L3), and which second path (54) is arranged so that the primary power cables (15) alternating extends between the wind power units (5) of the second line (L2) and the anchoring elements (7) of the third line (L3), and wherein the first cable path (52) independently connects the wind power units (5) of the first line (L1) to grid and the second cable path (54) independently connects the wind power units (5) of the second line (L2) to grid, preferably wherein the wind power park (40) is arranged so that the wind power units (5) are distributed forming a hexagonal cell (42) having one of the anchoring elements (7) located in the center of said hexagonal cell (42).

9. The power cable arrangement (1, 50) according to any one of the preceding claims, wherein the power cable arrangement (1, 50) comprises at least one secondary power cable (58) adapted to connect the wind power plant (3a, 3b) to the grid, which secondary power cable (58) is connected to said primary power cable (15) and extends away from the wind power plant (3a, 3b).

10. The power cable arrangement according to any one of the preceding claims, wherein the power cable arrangement comprises at least one tube (60) attached to and extending along at least one of the anchoring wires (9), in which tube (60) the primary power cable (15) extends.

11. A method for establishing a power cable arrangement (1, 50) according to any one of the preceding claims for an offshore wind power park (40), wherein the power cable arrangement (1, 50) comprises a power cable (15) and a plurality of connection elements (20), the connection elements (20) comprising an open state allowing the connection element (20) and the anchoring wire (9) to engage with each other, and a closed state maintaining the connection element (20) and the anchoring wire (9) engaged to each other,
the method comprising the steps of:
- attaching the power cable (15) to the connection element (20),
- setting the connection elements (20) to the open state,
- guiding the connection elements (20) together with the power cable (15) from the surface of the sea to the anchoring wire (9) so that the connection elements (20) engage with the anchoring wire (9), and
- setting the connection elements (20) to the closed state.

12. The method according to claim 11, wherein the method is carried out for a power cable arrangement (1, 50) comprising a guide arrangement for guiding the primary power cable (15) to the anchoring wire (9), which guide arrangement, for each connection element (20), comprises a float (24) at the surface of the sea, a guide wire (22) extending between the float (24) and said connection element (20), and a guide loop for the respective connection element, the method further comprising the steps of:
- arranging the guide loops around one of the power cable (15) and the connection element (20), and
- guiding the power cable (15) along the guide wires (22) to the anchoring wire (9),
preferably further comprising the step of:
- stretching the guide wires (22) while guiding the power cable (15) to the anchoring wire (9).

13. A method for establishing a power cable arrangement (1, 50) according to claim 11 for an offshore wind power park (40), the method comprising the steps of:
- attaching the tube to the anchoring wire (9), and
- pulling the power cable (15) into the tube.

14. The method according to claim 13, further comprising the step of:
- guiding the tube from the surface of the sea to the anchoring wire (9).

15. A method for disestablishing a power cable arrangement (1, 50) according to any one of claims 1-10 for an offshore wind power park (40), wherein the power cable arrangement (1, 50) comprises a power cable (15) and a plurality of connection elements (20), the connection elements (20) comprising an open state allowing the connection element (20) and the anchoring wire (9) to engage with each other, and a closed state maintaining the connection element (20) and the anchoring wire (9) engaged to each other,
the method comprising the steps of:
- setting the connection elements (20) to the open state,
- guiding the connection element (20) together with the power cable (15) from the anchoring wire (9) to the surface of the sea,
- removing the power cable (15) from the connection element (20).

## Patentansprüche

1. Stromkabelanordnung (1, 50) für eine Offshore-Windenergieanlage (40), welche Windenergieanlage (40) eine Vielzahl von Windenergiekraftwerken (3a, 3b) umfasst, wobei jede eine schwimmende Windenergieeinheit (5) umfasst, die an der Meeresoberfläche schwimmt, eine Vielzahl von Verankerungselementen (7), die in einem Bodensediment (10) des Meeres angeordnet sind, und eine Vielzahl von Verankerungsdrähten (9), die sich zwischen den Verankerungselementen (7) und der Windenergieeinheit (5) zum Verankern der Windenergieeinheit (5) erstrecken, wobei für jedes Windenergiekraftwerk (3a, 3b) die Stromkabelanordnung (1, 50) mindestens ein primäres Stromkabel (15) zum Verbinden des Windenergiekraftwerks (3a, 3b) mit dem Stromnetz umfasst, wobei für mindestens einen Abschnitt der Windenergiekraftwerke (3a, 3b) das primäre Stromkabel (15) an mindestens einem der Verankerungsdrähte (9) befestigt ist und sich entlang diesem erstreckt, wobei mindestens eines der Verankerungselemente (7) zur Verankerung mindestens einer ersten Windenergieeinheit (5) und einer zweiten Windenergieeinheit (5), die an die erste Windenergieeinheit (5) angrenzt, verwendet wird, wobei die erste Windenergieeinheit (5) und die zweite Windenergieeinheit (5) jeweilige primäre Stromkabel (15) umfassen, die so angeordnet sind, dass das primäre Stromkabel (15) der ersten Windenergieeinheit (5) an dem Verankerungsdraht (9) zwischen dem Verankerungselement (7) und der ersten Windenergieeinheit (5) befestigt ist und sich entlang diesem erstreckt, und das primäre Stromkabel (15) der zweiten Windenergieeinheit (5) an dem Verankerungsdraht (9) zwischen dem Verankerungselement (7) und der zweiten Windenergieeinheit (5) befestigt ist und sich entlang diesem erstreckt, **dadurch gekennzeichnet, dass** eine kombinierte Erstreckung der primären Stromkabel (15) erhalten wird und eine elektrische Verbindung zwischen den jeweiligen primären Stromkabeln (15) der ersten Windenergieeinheit (5) und der zweiten Windenergieeinheit (5) eingerichtet wird.

2. Stromkabelanordnung (1, 50) nach Anspruch 1, wobei die Stromkabelanordnung (1, 50) Befestigungsmittel zum Befestigen des primären Stromkabels (15) an dem Verankerungsdraht (9) umfasst, welches Befestigungsmittel eine Vielzahl von Verbindungselementen (20) umfasst, die entlang dem Verankerungsdraht (9) verteilt befestigt sind und eine lösbare Befestigung des primären Stromkabels (15) an dem Verankerungsdraht (9) bereitstellen, wobei das Verbindungselement (20) einen ersten Abschnitt (34) umfasst, der angeordnet ist, das primäre Stromkabel (15) aufzunehmen und an dem Verbindungselement (20) zu befestigen, und einen zweiten Abschnitt (35), der angepasst ist, den Verankerungsdraht (9) aufzunehmen, wobei das Verbindungselement (20) einen offenen Zustand umfasst, der angepasst ist, dem Verankerungsdraht (9) zu erlauben, vom zweiten Abschnitt (35) aufgenommen und entfernt zu werden, und einen geschlossenen Zustand, der angepasst ist, ein Entfernen des Verankerungsdrahts (9) vom zweiten Abschnitt (35) zu verhindern.

3. Stromkabelanordnung (1, 50) nach Anspruch 2, wobei der offene Zustand einer ersten Ausrichtung des Verbindungselements (20) entspricht und der geschlossene Zustand einer zweiten Ausrichtung des Verbindungselements (20) entspricht, und wobei die Stromkabelanordnung (1, 50) einen Steuerdraht (37) umfasst, der angepasst ist, eine Änderung des Verbindungselements (20) zwischen der ersten und der zweiten Ausrichtung aus der Ferne zu erlauben.

4. Stromkabelanordnung (1, 50) nach einem der Ansprüche 2-3, wobei die Stromkabelanordnung (1, 50) eine Führungsanordnung zum Führen des primären Stromkabels (15) zum Verankerungsdraht (9) umfasst, welche Führungsanordnung für jedes Verbindungselement (20) einen Schwimmkörper (24) an der Meeresoberfläche und einen Führungsdraht (22), der sich zwischen dem Schwimmkörper (24) und dem Verbindungselement (20) erstreckt, umfasst.

5. Stromkabelanordnung (1, 50) nach einem der vorstehenden Ansprüche, wobei die Stromkabelanordnung (1, 50) ein Zwischenstromkabel (30) zwischen dem primären Stromkabel (15) des ersten Windenergiekraftwerks (3a) und dem primären Stromkabel (15) des zweiten Windenergiekraftwerks (3b) umfasst, das elektrisch die zwei primären Stromkabel (15) miteinander verbindet, und ein Auftriebselement (32), das bei einem Abstand von einem Ende des Verankerungselements (7) angeordnet und konfiguriert ist, das Zwischenstromkabel (30) vom Ende des Verankerungselements (7) beabstandet zu halten, wobei das Auftriebselement (32) vorzugsweise zwischen der Meeresoberfläche und dem Ende des Verankerungselements (7) liegt.

6. Stromkabelanordnung (1, 50) nach Anspruch 5, wobei das primäre Stromkabel (15), das an dem Verankerungsdraht (9) zwischen dem Verankerungselement und der ersten Windenergieeinheit (5) befestigt ist, das Zwischenstromkabel (30) und das primäre Stromkabel (15), das an dem Verankerungsdraht (9) zwischen dem Verankerungselement (7) und der zweiten Windenergieeinheit (5) befestigt ist, ein einheitliches Stromkabel bilden.

7. Stromkabelanordnung (1, 50) nach einem der Ansprüche 5-6, wobei die Stromkabelanordnung (1, 50) mindestens ein erstes primäres Stromkabel (15a) und ein zweites primäres Stromkabel (15b) für jedes Windenergiekraftwerk (3) eines Abschnitts der Windenergiekraftwerke (3) umfasst, das angepasst ist, die Windenergieeinheiten (5) mit dem Stromnetz zu verbinden, wobei das erste primäre Stromkabel (15a) an einem ersten Verankerungsdraht (9) zwischen einem ersten Verankerungselement (7a) und der Windenergieeinheit (5) befestigt ist und sich entlang diesem erstreckt, und das zweite primäre Stromkabel (15b) an einem zweiten Verankerungsdraht (9) zwischen einem zweiten Verankerungselement (7b) und der Windenergieeinheit (5) befestigt ist und sich entlang diesem erstreckt.

8. Stromkabelanordnung (1, 50) nach einem der Ansprüche 5-7, wobei mindestens ein Abschnitt der Windenergieeinheiten (5) entlang einer ersten Linie (L1) und zweiten Linie (L2) angeordnet sind und die Verankerungselemente (7) entlang einer dritten Linie (L3) zwischen der ersten Linie (L1) und der zweiten Linie (L2) angeordnet sind, welche erste Linie (L1), zweite Linie (L2) und dritte Linie (L3) sich parallel zueinander erstrecken, wobei die Stromkabelanordnung (1, 50) eine Vielzahl von primären Stromkabeln (15) umfasst, wobei jede mindestens zwei separate Leiter umfasst, um die Windenergieeinheiten (5) mit dem Stromnetz zu verbinden, wobei die primären Stromkabel (15) in einem ersten Kabelpfad (52) und einem zweiten Kabelpfad (54) angeordnet sind, welcher erste Kabelpfad (52) so angeordnet ist, dass die primären Stromkabel (15) sich abwechselnd zwischen den Windenergieeinheiten (5) der ersten Linie (L1) und den Verankerungselementen (7) der dritten Linie (L3) erstrecken, und welcher zweite Pfad (54) so angeordnet ist, dass die primären Stromkabel (15) sich abwechselnd zwischen den Windenergieeinheiten (5) der zweiten Linie (L2) und den Verankerungselementen (7) der dritten Linie (L3) erstrecken, und wobei der erste Kabelpfad (52) unabhängig die Windenergieeinheiten (5) der ersten Linie (L1) mit dem Stromnetz verbindet und der zweite Kabelpfad (54) unabhängig die Windenergieeinheiten (5) der zweiten Linie (L2) mit dem Stromnetz verbindet, wobei die Windenergieanlage (40) vorzugsweise so angeordnet ist, dass die Windenergieeinheiten (5) verteilt sind, um eine hexagonale Zelle (42) zu bilden, wobei eines der Verankerungselemente (7) im Mittelpunkt der hexagonalen Zelle (42) liegt.

9. Stromkabelanordnung (1, 50) nach einem der vorstehenden Ansprüche, wobei die Stromkabelanordnung (1, 50) mindestens ein sekundäres Stromkabel (58) umfasst, das angepasst ist, die Windenergiekraftwerk (3a, 3b) mit dem Stromnetz zu verbinden, welches sekundäre Stromkabel (58) mit dem primären Stromkabel (15) verbunden ist und sich von der Windenergiekraftwerk (3a, 3b) weg erstreckt.

10. Stromkabelanordnung nach einem der vorstehenden Ansprüche, wobei die Stromkabelanordnung mindestens ein Rohr (60) umfasst, das an mindestens einem der Verankerungsdrähte (9) befestigt ist und sich entlang diesem erstreckt, in welchem Rohr (60) sich das primäre Stromkabel (15) erstreckt.

11. Verfahren zur Einrichtung einer Stromkabelanordnung (1, 50) nach einem der vorstehenden Ansprüche für eine Offshore-Windenergieanlage (40), wobei die Stromkabelanordnung (1, 50) ein Stromkabel (15) und eine Vielzahl von Verbindungselementen (20) umfasst, wobei die Verbindungselemente (20) einen offenen Zustand umfassen, der dem Verbindungselement (20) und dem Verankerungsdraht (9) erlaubt, miteinander einzugreifen, und einen geschlossenen Zustand, der das Verbindungselement (20) und den Verankerungsdraht (9) miteinander eingegriffen hält,
das Verfahren umfassend die Schritte zum:
- Befestigen des Stromkabels (15) am Verbindungselement (20),
- Einstellen der Verbindungselemente (20) auf den offenen Zustand,
- Zusammenführen der Verbindungselemente (20) mit dem Stromkabel (15) von der Meeresoberfläche zum Verankerungsdraht (9), sodass die Verbindungselemente (20) mit dem Verankerungsdraht (9) eingreifen, und
- Einstellen der Verbindungselemente (20) auf den geschlossenen Zustand.

12. Verfahren nach Anspruch 11, wobei das Verfahren für eine Stromkabelanordnung (1, 50) durchgeführt wird, die eine Führungsanordnung zum Führen des primären Stromkabels (15) zum Verankerungsdraht (9) umfasst, welche Führungsanordnung für jedes Verbindungselement (20) einen Schwimmkörper (24) an der Meeresoberfläche, einen Führungsdraht (22), der sich zwischen dem Schwimmkörper (24) und dem Verbindungselement (20) erstreckt, und eine Führungsschleife für das jeweilige Verbindungselement umfasst, wobei das Verfahren weiter die Schritte umfasst zum:
- Anordnen der Führungsschleifen um eines des Stromkabels (15) und des Verbindungselements (20), und
- Führen des Stromkabels (15) entlang der Führungsdrähte (22) zum Verankerungsdraht (9),
vorzugsweise weiter umfassend den Schritt zum:
- Dehnen der Führungsdrähte (22), während das Stromkabel (15) zum Verankerungsdraht (9) geführt wird.

13. Verfahren zur Einrichtung einer Stromkabelanordnung (1, 50) nach Anspruch 11 für eine Offshore-Windenergieanlage (40),
das Verfahren umfassend die Schritte zum:
- Befestigen des Rohres an dem Verankerungsdraht (9), und
- Ziehen des Stromkabels (15) in das Rohr.

14. Verfahren nach Anspruch 13, weiter umfassend den Schritt zum:
- Führen des Rohrs von der Meeresoberfläche zum Verankerungsdraht (9).

15. Verfahren zur Trennung einer Stromkabelanordnung (1, 50) nach einem der Ansprüche 1-10 für eine Offshore-Windenergieanlage (40), wobei die Stromkabelanordnung (1, 50) ein Stromkabel (15) und eine Vielzahl von Verbindungselementen (20) umfasst, wobei die Verbindungselemente (20) einen offenen Zustand umfassen, der dem Verbindungselement (20) und dem Verankerungsdraht (9) erlaubt, miteinander einzugreifen, und einen geschlossenen Zustand, der das Verbindungselement (20) und den Verankerungsdraht (9) miteinander eingegriffen hält,
das Verfahren umfassend die Schritte zum:
- Einstellen der Verbindungselemente (20) auf den offenen Zustand,
- Zusammenführen des Verbindungselements (20) mit dem Stromkabel (15) vom Verankerungsdraht (9) zur Meeresoberfläche,
- Entfernen des Stromkabels (15) vom Verbindungselement (20).

## Revendications

1. Agencement de câble d'énergie (1, 50) pour un parc éolien en mer (40), lequel parc éolien (40) comprend une pluralité de installations d'énergie éolienne (3a, 3b) comprenant chacune une unité d'énergie éolienne flottante (5) flottant au niveau de la surface de la mer, une pluralité d'éléments d'ancrage (7) agencés dans un sédiment de fond (10) de la mer et une pluralité de fils d'ancrage (9) s'étendant entre les éléments d'ancrage (7) et l'unité d'énergie éolienne (5) pour l'ancrage de l'unité d'énergie éolienne (5), dans lequel, pour chaque installation d'énergie éolienne (3a, 3b), l'agencement de câble d'énergie (1, 50) comprend au moins un câble d'énergie primaire (15) pour le raccordement de l'installation d'énergie éolienne (3a, 3b) au réseau, dans lequel pour au moins une portion des installations d'énergie éolienne (3a, 3b), le câble d'énergie primaire (15) est attaché à au moins un des fils d'ancrage (9) et s'étend le long de celui-ci, dans lequel
au moins un des éléments d'ancrage (7) est utilisé pour l'ancrage d'au moins une première unité d'énergie éolienne (5) et une seconde unité d'énergie éolienne (5) adjacente à la première unité d'énergie éolienne (5), dans lequel la première unité d'énergie éolienne (5) et la seconde unité d'énergie éolienne (5) comprennent des câbles d'énergie primaires (15) respectifs agencés de sorte que le câble d'énergie primaire (15) de la première unité d'énergie éolienne (5) soit attaché au fil d'ancrage (9) et s'étende le long de celui-ci entre ledit élément d'ancrage (7) et la première unité d'énergie éolienne (5), et le câble d'énergie primaire (15) de la seconde unité d'énergie éolienne (5) soit attaché au fil d'ancrage (9) et s'étende le long de celui-ci entre ledit élément d'ancrage (7) et la seconde unité d'énergie éolienne (5), **caractérisé en ce que**
une extension combinée des câbles d'énergie primaires (15) est obtenue et un raccordement électrique est établi entre les câbles d'énergie primaires (15) respectifs de la première unité d'énergie éolienne (5) et de la seconde unité d'énergie éolienne (5).

2. Agencement de câble d'énergie (1, 50) selon la revendication 1, dans lequel l'agencement de câble d'énergie (1, 50) comprend un moyen d'attache pour l'attache du câble d'énergie primaire (15) au fil d'ancrage (9), lequel moyen d'attache comprend une pluralité d'éléments de raccordement (20) attachés en étant distribués le long du fil d'ancrage (9) et fournissant une attache libérable du câble d'énergie primaire (15) au fil d'ancrage (9), dans lequel l'élément de raccordement (20) comprend une première portion (34) agencée pour recevoir et attacher le câble d'énergie primaire (15) à l'élément de raccordement (20) et une seconde portion (35) adaptée pour recevoir le fil d'ancrage (9), dans lequel l'élément de raccordement (20) comprend un état ouvert adapté pour permettre au fil d'ancrage (9) d'être reçu et d'être retiré de la seconde portion (35), et un état fermé adapté pour empêcher le fil d'ancrage (9) d'être retiré de la seconde portion (35).

3. Agencement de câble d'énergie (1, 50) selon la revendication 2, dans lequel l'état ouvert correspond à une première orientation de l'élément de raccordement (20) et l'état fermé correspond à une seconde orientation de l'élément de raccordement (20), et dans lequel l'agencement de câble d'énergie (1, 50) comprend un fil de commande (37) adapté pour permettre le changement à distance de l'élément de raccordement (20) entre la première et la seconde orientation.

4. Agencement de câble d'énergie (1, 50) selon l'une quelconque des revendications 2 à 3, dans lequel l'agencement de câble d'énergie (1, 50) comprend un agencement de guidage pour le guidage du câble d'énergie primaire (15) au fil d'ancrage (9), lequel agencement de guidage, pour chaque élément de raccordement (20), comprend un flotteur (24) au niveau de la surface de la mer et un fil de guidage (22) s'étendant entre le flotteur (24) et ledit élément de raccordement (20).

5. Agencement de câble d'énergie (1, 50) selon l'une quelconque des revendications précédentes, dans lequel l'agencement de câble d'énergie (1, 50) comprend un câble d'énergie intermédiaire (30) entre le câble d'énergie primaire (15) de la première installation d'énergie éolienne (3a) et le câble d'énergie primaire (15) de la seconde installation d'énergie éolienne (3b) qui raccorde électriquement les deux câbles d'énergie primaires (15) ensemble, et un élément de flottabilité (32) agencé à une distance d'une extrémité de l'élément d'ancrage (7) et configuré pour maintenir le câble d'énergie intermédiaire (30) espacé de l'extrémité dudit élément d'ancrage (7), de préférence dans lequel l'élément de flottabilité (32) est situé entre la surface de la mer et l'extrémité dudit élément d'ancrage (7).

6. Agencement de câble d'énergie (1, 50) selon la revendication 5, dans lequel le câble d'énergie primaire (15) attaché au fil d'ancrage (9) entre ledit élément d'ancrage et la première unité d'énergie éolienne (5), le câble d'énergie intermédiaire (30) et le câble d'énergie primaire (15) attachés au fil d'ancrage (9) entre ledit élément d'ancrage (7) et la seconde unité d'énergie éolienne (5) constituent un câble d'énergie unitaire.

7. Agencement de câble d'énergie (1, 50) selon l'une quelconque des revendications 5 à 6, dans lequel l'agencement de câble d'énergie (1, 50) comprend au moins un premier câble d'énergie primaire (15a) et un second câble d'énergie primaire (15b) pour chaque installation d'énergie éolienne (3) d'une portion des installations d'énergie éolienne (3), adaptés pour raccorder les unités d'énergie éolienne (5) au réseau, dans lequel le premier câble d'énergie primaire (15a) est attaché à un premier fil d'ancrage (9) et s'étend le long de celui-ci entre un premier élément d'ancrage (7a) et l'unité d'énergie éolienne (5), et le second câble d'énergie primaire (15b) est attaché à un second fil d'ancrage (9) et s'étend le long de celui-ci entre un second élément d'ancrage (7b) et l'unité d'énergie éolienne (5).

8. Agencement de câble d'énergie (1, 50) selon l'une quelconque des revendications 5 à 7, dans lequel au moins une portion des unités d'énergie éolienne (5) est agencée le long d'une première ligne (L1) et deuxième ligne (L2), et les éléments d'ancrage (7) sont agencés le long d'une troisième ligne (L3) entre la première ligne (L1) et la deuxième ligne (L2), laquelle première ligne (L1), deuxième ligne (L2) et troisième ligne (L3) s'étendent parallèlement les unes aux autres, dans lequel l'agencement de câble d'énergie (1, 50) comprend une pluralité de câbles d'énergie primaires (15), chacun comprenant au moins deux conducteurs séparés, pour le raccordement des unités d'énergie éolienne (5) au réseau, dans lequel les câbles d'énergie primaires (15) sont agencés dans un premier trajet de câble (52) et un second trajet de câble (54), lequel premier trajet de câble (52) est agencé de sorte que les câbles d'énergie primaires (15) s'étendent en alternance entre les unités d'énergie éolienne (5) de la première ligne (L1) et les éléments d'ancrage (7) de la troisième ligne (L3), et lequel second trajet (54) est agencé de sorte que les câbles d'énergie primaires (15) s'étendent en alternance entre les unités d'énergie éolienne (5) de la deuxième ligne (L2) et les éléments d'ancrage (7) de la troisième ligne (L3), et dans lequel le premier trajet de câble (52) raccorde indépendamment les unités d'énergie éolienne (5) de la première ligne (L1) au réseau et le second trajet de câble (54) raccorde indépendamment les unités d'énergie éolienne (5) de la deuxième ligne (L2) au réseau, de préférence dans lequel le parc éolien (40) est agencé de sorte que les unités d'énergie éolienne (5) soient distribuées en formant une cellule hexagonale (42) présentant un des éléments d'ancrage (7) situés au centre de ladite cellule hexagonale (42).

9. Agencement de câble d'énergie (1, 50) selon l'une quelconque des revendications précédentes, dans lequel l'agencement de câble d'énergie (1, 50) comprend au moins un câble d'énergie secondaire (58) adapté pour raccorder l'installation d'énergie éolienne (3a, 3b) au réseau, lequel câble d'énergie secondaire (58) est raccordé audit câble d'énergie primaire (15) et s'étend loin de l'installation d'énergie éolienne (3a, 3b).

10. Agencement de câble d'énergie selon l'une quelconque des revendications précédentes, dans lequel l'agencement de câble d'énergie comprend au moins un tube (60) attaché à au moins un des fils d'ancrage (9) et s'étendant le long de celui-ci, dans lequel tube (60) le câble d'énergie primaire (15) s'étend.

11. Procédé d'installation d'un agencement de câble d'énergie (1, 50) selon l'une quelconque des revendications précédentes pour un parc éolien en mer (40), dans lequel l'agencement de câble d'énergie (1, 50) comprend un câble d'énergie (15) et une pluralité d'éléments de raccordement (20), les éléments de raccordement (20) comprenant un état ouvert permettant à l'élément de raccordement (20) et au fil d'ancrage (9) de se mettre en prise l'un avec l'autre, et un état fermé maintenant l'élément de raccordement (20) et le fil d'ancrage (9) mis en prise l'un avec l'autre,
le procédé comprenant les étapes de :
- l'attache du câble d'énergie (15) à l'élément de raccordement (20),
- le réglage des éléments de raccordement (20) à l'état ouvert,
- le guidage des éléments de raccordement (20) conjointement avec le câble d'énergie (15) de la surface de la mer au fil d'ancrage (9) de sorte que les éléments de raccordement (20) se mettent en prise avec le fil d'ancrage (9), et
- le réglage des éléments de raccordement (20) à l'état fermé.

12. Procédé selon la revendication 11, dans lequel le procédé est réalisé pour un agencement de câble d'énergie (1, 50) comprenant un agencement de guidage pour le guidage du câble d'énergie primaire (15) au fil d'ancrage (9), lequel agencement de guidage, pour chaque élément de raccordement (20), comprend un flotteur (24) au niveau de la surface de la mer, un fil de guidage (22) s'étendant entre le flotteur (24) et ledit élément de raccordement (20), et une boucle de guidage pour l'élément de raccordement respectif, le procédé comprenant en outre les étapes de :
- l'agencement des boucles de guidage autour d'un parmi le câble d'énergie (15) et l'élément de raccordement (20), et
- le guidage du câble d'énergie (15) le long des fils de guidage (22) au fil d'ancrage (9),
de préférence comprenant en outre l'étape de :
- l'étirement des fils de guidage (22) tout en guidant le câble d'énergie (15) au fil d'ancrage (9).

13. Procédé d'installation d'un agencement de câble d'énergie (1, 50) selon la revendication 11, pour un parc éolien en mer (40), le procédé comprenant les étapes de :
- l'attache du tube au fil d'ancrage (9), et
- la traction du câble d'énergie (15) dans le tube.

14. Procédé selon la revendication 13, comprenant en outre l'étape de :
- le guidage du tube depuis la surface de la mer au fil d'ancrage (9).

15. Procédé de désinstallation d'un agencement de câble d'énergie (1, 50) selon l'une quelconque des revendications 1 à 10 pour un parc éolien en mer (40), dans lequel l'agencement de câble d'énergie (1, 50) comprend un câble d'énergie (15) et une pluralité d'éléments de raccordement (20), les éléments de raccordement (20) comprenant un état ouvert permettant à l'élément de raccordement (20) et au fil d'ancrage (9) de se mettre en prise l'un avec l'autre, et un état fermé maintenant l'élément de raccordement (20) et le fil d'ancrage (9) mis en prise l'un avec l'autre,
le procédé comprenant les étapes de :
- le réglage des éléments de raccordement (20) à l'état ouvert,
- le guidage de l'élément de raccordement (20) conjointement avec le câble d'énergie (15) depuis le fil d'ancrage (9) à la surface de la mer,
- le retrait du câble d'énergie (15) de l'élément de raccordement (20).
